# EUROPÄISCHE PATENTSCHRIFT

(11) **EP 0 621 433 B1**
(45) Veröffentlichungstag und Bekanntmachung des Hinweises auf die Patenterteilung: **01.07.1998**
(21) Anmeldenummer: 94105462.9
(22) Anmeldetag: 08.04.1994
(51) Int. Cl.: F16L 41/08, F16L 33/00, F16L 47/00

(54) **Schlauchanschluss an einer Platte**
Hose connection to a wall
Connexion d'un tuyau souple sur une paroi

(30) Priorität: 08.04.1993 DE 9305401 U
(43) Veröffentlichungstag der Anmeldung: 26.10.1994
(73) Patentinhaber: Trost, Bärbel, Dipl.-Ing., 97947 Grünsfeld (DE)
(72) Erfinder: Trost, Bärbel, Dipl.-Ing., 97947 Grünsfeld (DE)
(74) Vertreter: Wolf, Eckhard, Dr.-Ing.

(56) Entgegenhaltungen:
- BE-A- 699 880
- FR-A- 2 270 509

## Beschreibung

Die Erfindung bezieht sich auf eine Anordnung gemäß Oberbegriff von Anspruch 1, wie sie z.B. aus der FR-A-2 270 509 bekannt ist.

Der Erfindung liegt die Aufgabe zugrunde, den Schlauchanschluß so zu gestalten, daß zu der Platte eine dichtende Verbindung hergestellt werden kann, ohne das es dafür aufwendiger konstruktiver Mittel bedarf. Dieses Problem wird durch die kennzeichrenden Merkmale des Anspruchs 1 gelöst.

Das durch die Öffnung in der Platte ragende Ende des Schlauches wird dabei in vorteilhafter Weise als Dichtung gegenüber der Öffnung und der Platte ausgenutzt, indem das Rohrstück mit seinem radial umgelegten Bund das Schlauchende sowohl in den Rand der Öffnung als auch hinter dem Rand der Öffnung gegen die Platte drückt. Dabei rastet das Rohrstück bei seinem Eindrücken zusammen mit dem Schlauchende in der Öffnung dadurch ein, daß sich die nach außen gerichtete Sicke im Rohrstück hinter den Rand der Öffnung setzt, womit durch die Klemmwirkung der Sicke weiterhin eine Dichtzone zwischen Platte und Schlauch entsteht.

Ein Ausführungsbeispiel ist in den Figuren dargestellt. Es zeigen:
- Figur 1: einen Schnitt durch den Schlauchanschluß,
- Figur 2: eine Draufsicht auf die Platte mit eingesetztem Schlauchanschluß.

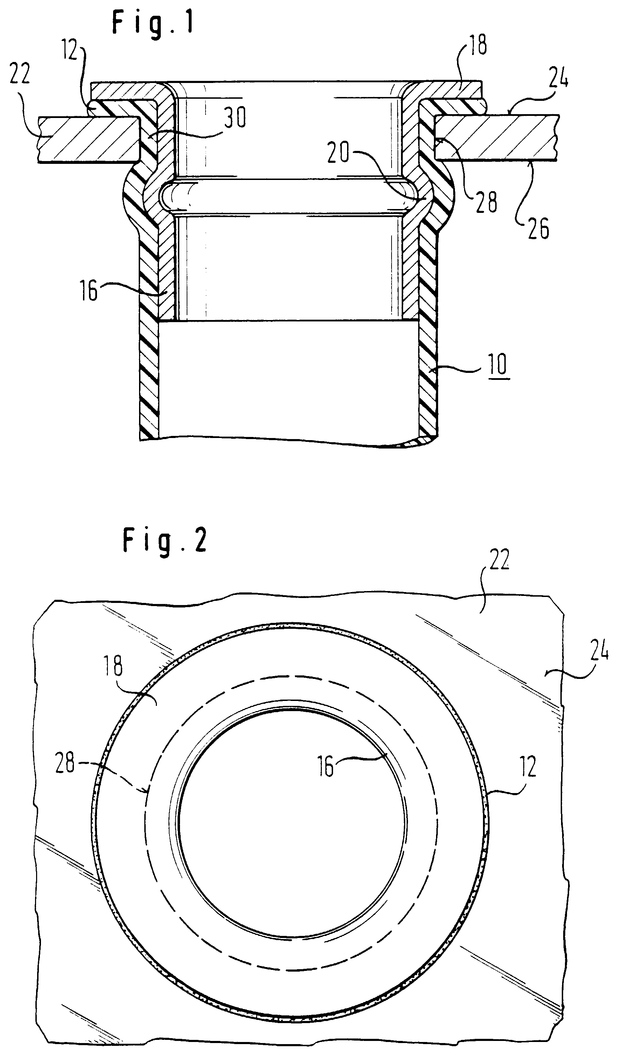

Figur 1 zeigt den Schlauch 10, der durch die Öffnung 28 in der Platte 22 hindurchgeführt ist und auf der Oberseite 24 der Platte 22 mit seinem dortigen Ende 12 eine Art Flansch bildet. In den Schlauch 10 ist das aus hartem Material, z. B. Stahl, bestehende Rohrstück 16 eingesetzt, das sich mit seinem nach außen radial umgelegten Bund 18 gegen das Ende 12 des Schlauches 10 abstützt. Das Rohrstück 16 ist mit der Sicke 20 versehen, die radial nach außen gerichtet ist und einen solchen Abstand von dem Bund 18 einhält, daß der Schlauch 10 im Bereich der Öffnung 28 zwischen der Sicke 20 und dem Bund 18 eingeklemmt wird. Der von der unteren Seite 26 der Platte 22 gebildete Rand an der Unterseite der Öffnung 28 drückt sich dabei etwas in den Schlauch ein und bildet hier eine Dichtzone. Eine weitere Dichtzone wird vor allem im Bereich des Schlauchendes 12 gebildet, wo dieses von dem Bund 18 gegen die Oberseite 24 der Platte 22 gedrückt wird.

Für das Zusammensetzen des dargestellten Schlauchanschlusses wird in die Öffnung 28 der Platte 22 der Schlauch 10 so weit eingeführt, daß sich sein Ende 12, wie in der Figur 1 dargestellt, entsprechend umlegen läßt. Es wird sodann das Rohrstück 16 in die offene Seite des Schlauches 10 eingeführt, wobei die Sicke 20 über den Rand der Öffnung 28 in der Platte 22 hinwegspringt und schließlich in der in Figur 1 dargestellten Endlage die oben erwähnte Zusammenpressung des Schlauches 10 zwischen der Sicke 20 und dem Bund 18 bewirkt.

Figur 2 zeigt die Anordnung gemäß Figur 1 in Draufsicht, in der das Rohrstück 16 in der Platte 22 eingesetzt gezeichnet ist, unter dessen Bund 18 das Schlauchende 12 geringfügig vorsteht. In Figur 2 ist schließlich noch die Öffnung 28 in der Platte 22 gezeigt, gegen die radial nach außen der Schlauch 10 durch das Rohrstück 16 gedrückt wird.

## Patentansprüche

1. Anordnung zur Verbindung eines aus nachgiebigem Material bestehenden Schlauches (10) mit einer Platte (22), bestehend aus der Platte (22), die mit einer den Zugang zu dem Schlauch bildenden Öffnung (28) versehen ist, einem in ein Ende (12) des Schlauches (10) eingesetzten festen Rohrstück (16), das sich mit einem radial umgelegten Bund (18) gegen die eine Seite (24) der Platte (22) abstützt und durch diese hindurchragt, und dem Schlauch (10), der so weit zwischen Rohrstück (16) und Platte (22) reicht, daß er eine Dichtzone im Bereich zwischen der Platte (22) und dem Bund (18) bildet, **dadurch gekennzeichnet,** daß das Rohrstück (16) mit einer nach außen gerichteten Sicke (20) versehen ist, die sich im Verbindungszustand auf der anderen Seite (26) der Platte (22) hinter den Rand der Öffnung (28) setzt, so daß der Schlauch (10) im Bereich der Öffnung (28) zwischen der Sicke (20) und dem Bund (18) eingeklemmt ist und eine Dicht- und Presszone (30) im Bereich der Sicke (20) bildet.

## Claims

1. Arrangement for connecting a hose (10) consisting of an elastic material to a plate (22), comprising the plate (22) which has an opening (28) forming the access to the hose, a rigid piece of pipe (16) which is inserted into one end (12) of the hose (10) and which penetrates the plate (22) and is supported on one side (24) of the plate (22) by means of a radially flanged collar (18), and the hose (10) which extends so far between the piece of pipe (16) and the plate (22) that it forms a seal in the region between the plate (22) and the collar (18),
**characterized in that** the piece of pipe (16) is provided with an outwardly directed bead (20) which is located on the other side (26) of the plate (22) behind the edge of the opening (28) in the connected state, so that the hose (10) is clamped between the bead (20) and the collar (18) in the region of the opening (28) and forms a sealing and compression zone (30) in the region of the bead (20).

## Revendications

1. Dispositif pour raccorder un tuyau (10) en un matériau souple à une plaque (22), composé de la plaque (22) munie d'un orifice (28) permettant l'accès au tuyau, d'un manchon rigide (16) enfoncé dans une extrémité (12) du tuyau souple (10), qui prend appui avec un épaulement replié radialement (18) sur l'une des faces de la plaque (22) et traverse cette dernière, et du tuyau (10) qui s'étend si loin entre le manchon (16) et la plaque (22) qu'il forme une zone d'étanchéité dans la partie située entre la plaque (22) ct le collet (18), caractérisé en ce que le manchon (16) est muni d'une moulure (20) dirigée vers l'extérieur qui, lorsque le raccordement est réalisé, vient se placer sur l'autre face (26) de la plaque (22), derrière le bord de l'orifice (28), de sorte que le tuyau (10) est immobilisé dans la zone de l'orifice (28) entre la moulure (20) et le collet (18) et forme unc zonc d'étanchéité et de compression (30) dans la zone de la moulure (20).
